# EUROPÄISCHE PATENTSCHRIFT

(11) **EP 1 649 745 B1**
(45) Veröffentlichungstag und Bekanntmachung des Hinweises auf die Patenterteilung: **03.09.2008**
(21) Anmeldenummer: 05022373.4
(22) Anmeldetag: 13.10.2005
(51) Int. Cl.: A01K 27/00

(54) **Führvorrichtung für Tiere, insbesondere Hunde**
Guiding device for animals, in particular for dogs
Dispositf de guidage pour animaux, en particulier pour chien

(30) Priorität: 20.10.2004 DE 102004051151
(43) Veröffentlichungstag der Anmeldung: 26.04.2006
(73) Patentinhaber: Sohler Mark, 88239 Wangen (DE); Schneider Hubert, 88239 Wangen (DE)
(72) Erfinder: Sohler Mark, 88239 Wangen (DE); Schneider Hubert, 88239 Wangen (DE)
(74) Vertreter: Baronetzky, Klaus

(56) Entgegenhaltungen:
- DE-U1- 9 216 023
- US-A- 3 099 250
- US-B1- 6 694 923

## Beschreibung

Die Erfindung betrifft eine Führvorrichtung für Tiere, gemäß dem Oberbegriff von Anspruch 1.

Seit längerem sind Führvorrichtungen für Tiere bekannt, die dazu bestimmt sein sollen, das betreffende Tier, beispielsweise einen Hund, sicher zu führen, auch wenn beispielsweise der Hund an der Führvorrichtung zieht. Eine Belastungssituation, die besonders kritisch ist und häufig zu einem Sturz des Tierführers führt, ist ein seitliches Ziehen, wenn der Tierführer läuft oder wenn er gar mit dem Fahrrad fährt.

In dieser Situation lässt sich die von dem Haustier ausgeübte seitliche Kraft schlecht auffangen, so dass es auch schon einmal zu einem Sturz kommen kann.

Um die Kraft zu reduzieren, sind verschiedene Maßnahmen bekannt geworden. Beispielsweise ist es bekannt geworden, das biegeschlaffe Verbindungselement, also die Leine für das Anleinen des Tieres, mit einem Federelement auszurüsten. Mit dem Federelement wird die ausgeübte Kraft etwas vergleichmäßigt, so dass sie sich nicht so ruckartig aufbaut.

Ferner sind nachgiebige Hundleinen bekannt geworden, bei denen die Leine in einer Trommel aufgerollt ist. Der Hundeführer soll für die Freigabe der Bewegung des Hundes einen Lösetaste betätigen, so dass der Hund sich zunächst in beliebiger Richtung bewegen kann. Auch hierdurch kann es aber zu ungünstigen Situationen kommen, beispielsweise wenn Hund und Mensch sich auf zwei verschiedenen Seiten eines Baumes bewegen, so dass die dann verlängerte Hundeleine von dem Baum aufgehalten wird.

Um das Haustier, insbesondere den Hund, von der Ausübung von signifikanter Zugkraft, insbesondere zur Seite, abzuhalten, sind auch sogenannte Würgehalsbänder bekannt geworden. Mit diesen Halsbändern, die auch mit einwärts, also zum Hals des Hundes hin, gerichteten Stacheln versehen sein können, wird eine Würdekraft auf den Hals des Hundes ausgeübt, sobald er an der Leine zieht.

Derartige Lösungen werden allerdings von Tierfreunden abgelehnt.

Ein weiteres Problem, das gerade bei schneller Bewegung von Haustier und Mensch im angeleinten Zustand des Haustiers auftritt, hängt damit zusammen, dass die Leine oder Kette biegeschlaff ist. Sie wird typischerweise nicht ganz auf Spannung gehalten, sondern hängt durch, gerade, wenn der Hund oder beispielsweise die Katze dem Tierführer willig folgt. In diesem Zustand kann sie eine Schlaufe bis zum Boden hin bilden, so dass die signifikante Gefahr besteht, dass der Hund oder das sonstige Haustier auf sie tritt oder über sie hinweg tritt. Wenn ein größerer Hund die Leine zufälligerweise mit der Pfote erwischt, kommt es zu einem abrupten Stop, der auch zu einem Sturz des Hundeführers führen kann, beispielsweise wenn dieser joggt oder wenn er mit dem Fahrrad fährt.

Auch wenn der Hund mit einer seiner Vorderpfoten lediglich über die Leine tritt, verläuft sie dann ungünstig hinter der betreffenden Vorderpfote, so dass der Hund in seiner Fortbewegung gehindert ist. Der Tierführer muss dann anhalten und erneut für den richten Leinenverlauf sorgen.

Die US 6,694,923 B1 beschreibt ein Geschirr für Haustiere, das sich lösbar um die Brust und den Rücken des Tieres erstreckt, mit einer Vorrichtung, mit welcher eine vorgegebene Drehposition des Geschirrs relativ zu dem Tier festlegbar ist. Das Geschirr weist weiterhin eine Anschlussvorrichtung mit einem Anschlussstummel auf, der sich nach oben weg erstreckt und an seinem anderen Ende eine Kupplung zum Anschließen einer Leine aufweist.

Der Anschlussstummel besteht aus Metall und weist einen Stiel mit einer Klemmbacke auf, was den Nachteil hat, dass der insofern starre Anschlussstummel beschädigt werden kann, wenn sich das Tier auf dem Rücken wälzt.

Die US 3,099,250 beschreibt ein Geschirr bzw. ein Halsband mit einer Leine, die an ihrer dem Tier abgewandten Seite mit einem pistolenartigen Handgriff für den Tierhalter ausgerüstet ist, welcher mit einer Sicherheitsleine am Handgelenk des Tierhalters gesichert werden kann. Die Leine wird an dem Geschirr bzw. dem Halsband mit einem Bolzen oder einem Kreuzgelenk verbunden. Jedoch weist auch diese Verbindung die weiter oben genannten Nachteile auf, hinzu kommt die mögliche Verletzungsgefahr, wenn sich das Tier am Boden wälzt und Elemente des recht festen Kreuzgelenkes in den Nacken des Tieres drücken.

Die DE 92 16 023 U1 beschreibt ein Halsband mit einem Schnellverschluss, der auf seiten des Halsbandes aus einem nach außen weisenden, im Halsband drehbar gelagerten Nippel zur Befestigung der Leine sowie einem Zentriertrichter und auf seiten der Leine aus einem Mechanismus aus Spreizschenkeln und einer Druckfeder besteht. Die Leine soll über eine flexible Rohrverbindung nach Art eines Bowdenzuges mit dem Halsband verbunden werden können, ohne dass es nötig wird, sich zum Halsband herunterzubeugen.

Aus der DE 38 37 507 A1 ist ein Hals- und Brustband für Hunde und andere Tiere bekannt, das verschiedene Verschlussstellungen ermöglicht. Bei einer der Verschlussstellungen ist es vorgesehen, dass ein Metallring, der als Kupplung für die Hundeleine dienen soll, im Nacken des Hundes bleibt. Auch bei dieser Lösung kann die dort vorgesehene Hundleine jedoch seitlich neben dem Hundekörper nach unten durchhängen und damit als Stolperleine für den Hund wirken.

Daher liegt der Erfindung die Aufgabe zugrunde, eine Tierführvorrichtung gemäß dem Oberbegiff von Anspruch 1 zu schaffen, die besonders beim Joggen oder Fahrradfahren zusammen mit dem Tier ergonomisch verbessert ist, aber dennoch keine nenneswerten zusätzlichen Kosten verursacht.

Diese Aufgabe wird erfindungsgemäß durch Anspruch 1 gelöst. Vorteilhafte Weiterbildungen ergeben sich aus den Unteransprüchen.

Die erfindungsgemäße Tierführvorrichtung erlaubt es durch die aufrechte Führung des biegeschlaffen Verbindungselements (also der Leine oder Kette), zu gewährleisten, dass das Verbindungselement nicht in den Bereich der Füße des Hundes oder sonstigen Haustier gerät, auch dann, wenn der Hund oder das sonstige Haustier recht nahe bei dem Tierführer läuft. Erfindungsgemäß ist hierzu ein Anschlussstummel vorgesehen, der auf dem Tier so knickfest befestigt ist, dass er die Tierleine oder Kette nach oben wegführt. Die Leine ist zwar biegeschlaff, hat aber typischerweise einen gewissen Biegeradius, der in vorteilhafter Ausgestaltung der Erfindung ausgenützt werden kann, um zu gewährleisten, dass die Leine sich zunächst in einem hohen Bogen vom Rücken oder Nacken des Haustiers weg erstreckt und dann seitlich zum Tierführer hin verläuft, ohne den Boden zu berühren.

Der Biegeradius beträgt in vorteilhafter Ausgestaltung mindestens 10 cm, was sich mit einer steifen Leine, beispielsweise aus Leder, ohne Weiteres realisieren lässt. Insofern ist erfindungsgemäß eine Leine gegenüber einer Kette bevorzugt.

Trotz der Wegführung der Leine nach oben ist gewährleistet, dass der Hund oder das sonstige Haustier sicher festgehalten werden kann.

Die erfindungsgemäße Leine ist gerade auch für die Erziehung des Hundes, bereits ab dem Welpenalter, geeignet, denn dadurch, dass sie nicht vom Hals herunterhängt und den Hund beispielsweise beim Schnüffeln und Graben stört, sondern vielmehr nach oben verläuft, wird vermieden, dass der Hund eine Aversion gegen das Anleinen entwickelt.

Es versteht sich, dass die genaue Ausgestaltung in weiten Bereichen an die Erfordernisse anpassbar ist. So lässt sich beispielsweise durch die Realisierung der Kupplung sicherstellen, dass die Leine anschließend an den Anschlussstummel zunächst in dessen Verlängerung verläuft, bevor sie nach unten geführt ist. Auch ist es möglich, die Höhe des Anschlussstummel in weiten Bereichen an die Erfordernisse anzupassen, wobei ein kurzer Anschlussstummel bei Verwendung einer Steckvorrichtung als Kupplung ausreicht, hingegen ein langer Anschlussstummel ausreicht, wenn ein Ring als Kupplung eingesetzt wird, in den beispielsweise ein Karabinerhaken der Hundeleine einklinkbar ist.

In einer bevorzugten Ausgestaltung ist es vorgesehen, dass der Anschlussstummel selbst zwar ausreichend steif ist, dass er auch eine recht schwere Leine oder Kette aufrecht trägt. Er ist jedoch bevorzugt seitlich elastisch beweglich, so dass insofern eine gewisse Federwirkung beim plötzlichen seitlichen Ausweichen des Haustieres zusätzlich erfindungsgemäß bereitgestellt wird.

Weitere Vorteile, Einzelheiten und Merkmale ergeben sich aus der nachfolgenden Beschreibung der Erfindung anhand der Beschreibung.

Es zeigen:
- Fig. 1: eine schematische Ansicht einer ersten Ausführungsform einer erfindungsgemäßen Führvorrichtung; und
- Fig. 2: eine schematische Ansicht einer zweiten Ausführungsform einer erfindungsgemäßen Führvorrichtung.

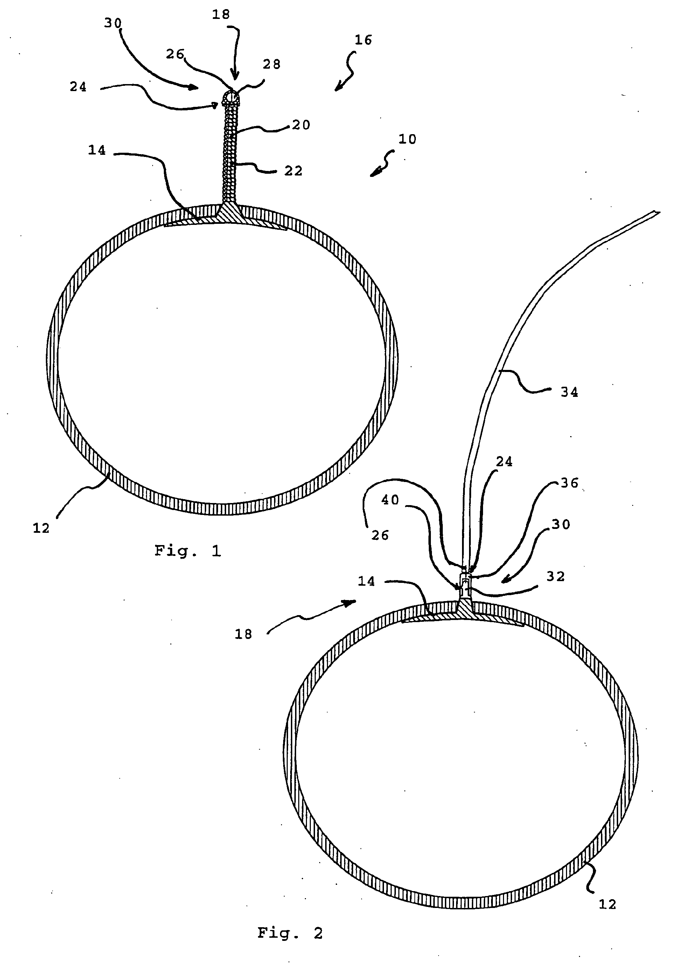

In Fig. 1 ist ein Teil einer erfindungsgemäßen Führvorrichtung 10 schematisch ersichtlich. Die erfindungsgemäße Führvorrichtung 10 weist ein Halsband 12 auf, das in Fig. 1 schematisch dargestellt ist. Das Halsband 12 ist hier der Einfachheit halber in geschlossener Form dargestellt, wobei es sich versteht, dass anstelle dessen ein typisches Halsband einen nicht dargestellten Verschluss aufweist.

Ferner weist das Halsband 12 eine Positionsfestlegungsvorrichtung auf, die hier ebenfalls nicht dargestellt ist. Die Positionsfestlegungsvorrichtung kann beispielsweise aus einem zusätzlichen Riemen bestehen, der zwischen den Vorderbeinen des Tieres verläuft und zu dem Halsband 12 zurückgeführt ist. Hierdurch wird sichergestellt, dass die Stellung des Halsbands sich auch bei einer Bewegung des Haustieres nicht ändert.

Erfindungsgemäß erstreckt sich oben, also etwa im Nacken des Tieres, ein Stützbereich 14 des Halsbands. In vorteilhafter Ausgestaltung ist dort eine verbreiterte Nackenauflage vorgesehen, die beispielsweise aus einem etwas breiteren Lederstreifen bestehen kann, der dort an dem Halsband befestigt ist.

Erfindungsgemäß ist eine Anschlussvorrichtung 16 für die Leine vorgesehen, die der Führung des Tieres dient. Hierzu ist in dem dargestellten Ausführungsbeispiel ein Anschlussstummel 18 ausgebildet, der fest an dem Stützbereich 14 befestigt ist. In dieser Ausführungsform ist der Stützbereich 14 unterhalb des Halsbands 12 vorgesehen, wobei es sich versteht, dass anstelle dessen auch eine Anordnung oberhalb des Halsbandes möglich ist. Gemäß einer weiteren alternativen Ausgestaltung ist der Anschlussstutzen 18 unmittelbar an dem Halsband befestigt.

In dem dargestellten Ausführungsbeispiel weist der Anschlussstutzen 18 eine vorgespannte Feder, beispielsweise aus Federstahl, auf. Die einzelnen Windungen 22 der Feder liegen aufeinander vorgespannt auf, so dass die Feder 20 dazu neigt, gerade zu verbleiben und sich erst nach Aufbringen einer Initialbiegekraft seitlich elastisch abbiegen lässt.

Die Feder 20 endet an einem Drehgelenk 24, das um eine vertikale Achse 26 frei verschwenkbar ist.

Das Drehgelenk 24 verbindet die Feder 20 mit einer Öse 28, die in dem dargestellten Ausführungsbeispiel eine kreisringförmige Öffnung aufweist und als Kupplung 30 dient, damit der Tierführer dort eine Leine, beispielsweise über deren Karabinerhaken, lösbar befestigen kann.

Die Feder 20 weist in dem dargestellten Ausführungsbeispiel ein innenliegendes Zugband auf. Hierdurch wird verhindert, dass sich die Feder über den Elastizitätsbereich hinaus dehnt und daher nicht mehr zu gebrauchen ist. Das Zugband ermöglicht jedoch eine freie Bewegung der Feder im übrigen, soweit der Elastizitätsbereich nicht überschritten wird.

Erfindungsgemäß ist es gemäß dem hier dargestellten Ausführungsbeispiel vorgesehen, dass sich der Anschlussstummel 18 stets nach oben weg erstreckt. Damit wird der Kupplungspunkt für die Leine deutlich, beispielsweise um 10 oder sogar um 20 cm nach oben verlagert, und auch beim Durchhängen der Leine ist die Gefahr, dass das Haustier mit seinen Füßen in eine Schlaufe der Leine tritt, deutlich geringer oder sogar ausgeschlossen. Dennoch ist das Tier frei beweglich, und auch wenn es sich beispielsweise auf dem Rücken wälzt, wird der elastisch bewegliche Anschlussstummel nicht beschädigt.

Eine modifizierte Ausgestaltung der erfindungsgemäßen Führvorrichtung ist aus Fig. 2 ersichtlich. Gleiche Bezugszeichen weisen hier auf gleiche oder entsprechende Teile wie in Fig. 1 hin. Bei diesem Ausführungsbeispiel ist die Kupplung 30 in anderer Weise ausgebildet. Sie weist ein Steckelement 32 auf, das an dem Stützbereich 14 befestigt ist. Das Steckelement 32 wird im Anschlusszustand der Leine 34 von einem Hülsenelement 36 übergriffen. Das Hülsenelement 36 kann über einen Rastvorsprung 40 an dem Steckelement 32 einrasten. Durch Betätigung eines nicht dargestellten Löseknopfes an dem Hülsenelement 36 ist die Kupplungsverbindung über den Rastvorsprung 40 lösbar, so dass die Leine 34 abnehmbar ist. In dem dargestellten Ausführungsbeispiel ist zwischen der Leine 34 und dem Hülsenelement 36 ein Drehgelenk 24 vorgesehen. Alternativ ist es auch möglich, die Rastverbindung 40 selbst drehbar zu realisieren, so dass sich das Hülsenelement 36 auf dem Steckelement 32 frei drehen kann und damit das Drehgelenk 24 entbehrlich wird.

In dem dargestellten Ausführungsbeispiel ist der kupplungsnahe Bereich der Leine 34 etwas verstärkt. Die Kupplung 30 hält diesen Bereich aufrecht, so dass sich die Leine 34 stets nach oben weg erstreckt. Hierdurch bedingt ist die Baulänge des Anschlussstummels 18 noch deutlich geringer, beispielsweise eigentlich 2 cm.

Während es bevorzugt ist, das Steckelement 32 halsbandseitig vorzusehen, um Verschmutzungen möglichst gering zu halten, versteht es sich, dass eine beliebige andere Art von Kupplungen geeignet ist, um die erfindungsgemäße Kuppelvorrichtung zu realisieren. Bei einer der Ausführungsformen gemäß Fig. 2 entsprechenden Ausgestaltung muss die Kupplung die Leine im kupplungsnahen Bereich in Richtung der Drehachse 26 halten, während dies bei einem längeren Anschlussstummel 18 (vgl. Fig. 1) nicht erforderlich ist.

## Patentansprüche

1. Führvorrichtung für Tiere, insbesondere Hunde, mit einem Halsband oder Geschirr, das sich lösbar um den Hals des Tieres erstreckt, und mit einer Positionsfestlegungsvorrichtung, mit welcher eine vorgegebene Drehposition des Halsbandes oder Geschirrs relativ zu dem Tier festlegbar ist, und mit einer Anschlussvorrichtung an dem Halsband, wobei die Anschlussvorrichtung einen Anschlussstummel (18) aufweist, der sich bei an das Tier angelegtem Halsband (12) oder Geschirr nach oben weg erstreckt, mit dem Halsband (12) knickfest verbunden ist und an seinem von dem Tier abgewandten Ende eine Kupplung (30) aufweist, wobei diese kupplung (30) zum Anschließen eines biegeschlaffen Verbindungselements (34) geeignet ausgebildet ist, **dadurch gekennzeichnet, dass** der Anschlussstummel (18) elastisch beweglich ausgebildet ist.

2. Führvorrichtung nach Anspruch 1, **dadurch gekennzeichnet,dass** der Anschlussstummel (18) an seiner Wurzel fest mit dem Halsband (12) oder Geschirr verbunden ist und sich im Wesentlichen lotrecht zu einem nacken- oder rückenseitigen Stützbereich (14) des Halsbands (12) oder Geschirrs erstreckt.

3. Führvorrichtung nach Anspruch 2, **dadurch gekennzeichnet, dass** der Stützbereich (14) des Halsbands (12) oder Geschirrs nach vorne und/oder nach hinten, also zum Kopf oder zum Schwanz des Tieres, verbreitert ist, insbesondere auf die doppelte Breite des Halsbands (12) oder Geschirrs.

4. Führvorrichtung nach Anspruch 2 oder 3, **dadurch gekennzeichnet, dass** der Stützbereich (14) unterhalb des Halsbandes (12) oder Geschirrs befestigt ist, wobei der Anschlussstummel (18) mit dem Stützbereich (14) fest verbunden ist.

5. Führvorrichtung nach Anspruch 4, **dadurch gekennzeichnet, dass** der unterhalb des Halsbandes (12) oder des Geschirrs angebrachte Stützbereich (14) derart ausgebildet ist, dass er in den oberhalb des Halsbandes (12) oder des Geschirrs angeordneten Anschlussstummel (18) übergeht.

6. Führvorrichtung nach einem der vorhergehenden Ansprüche, **dadurch gekennzeichnet, dass** der Anschlussstummel (18) vorzugsweise aus einer Spiralfeder (20) oder einem Elastomer besteht.

7. Führvorrichtung nach Anspruch 6, **dadurch gekennzeichnet, dass** die Spiralfeder (20) Windungen (22) aufweist, die derart aufeinander vorgespannt sind, dass die Spiralfeder (20) erst nach Aufbringen einer Initialbiegekraft seitlich elastisch abbiegbar ist.

8. Führvorrichtung nach einem der Ansprüche 6 oder 7, **dadurch gekennzeichnet, dass** die Spiralfeder (20) ein innenliegendes Zugband aufweist, welches eine freie Bewegung der Spiralfeder im Elastizitätsbereich ermöglicht.

9. Führvorrichtung nach einem der vorhergehenden Ansprüche, **dadurch gekennzeichnet, dass** der Anschlussstummel (18) eine Länge von 1,5 bis 30 cm, insbesondere von 5 bis 20 cm und bevorzugt von näherungsweise 12 bis 15 cm aufweist.

10. Führvorrichtung nach einem der vorhergehenden Ansprüche, **dadurch gekennzeichnet, dass** die Kupplung (30) in Form eines Rings (28) oder eines Steckgliedes (32) ausgebildet ist.

11. Führvorrichtung nach einem der vorhergehenden Ansprüche, **dadurch gekennzeichnet, dass** die Kupplung (30) des Anschlussstummels (18) einen freien Innendurchmesser von 8 mm bis 40 mm, insbesondere von näherungsweise 20 mm, aufweist, und insbesondere eine geschlossene geometrische Form wie einen Ring, bevorzugt einen Torus, bildet, und für den Anschluss des biegeschlaffen Verbindungselements, insbesondere einer Leine (34), geeignet ausgebildet ist.

12. Führvorrichtung nach einem der vorhergehenden Ansprüche, **dadurch gekennzeichnet, dass** der Anschlussstummel (18) sich zur Kupplung (30) hin verjüngt und insbesondere die Kupplung (30) fest mit dem Anschlussstummel (18) verbunden ist.

13. Führvorrichtung nach einem der vorhergehenden Ansprüche, **dadurch gekennzeichnet, dass** die Kupplung (30) einen aufrecht stehenden Ring, insbesondere in Form eines Kreisrings oder eines Halbkreisrings, aufweist.

14. Führvorrichtung nach einem der vorhergehenden Ansprüche, **dadurch gekennzeichnet, dass** die Kupplung (30) ein Schwenkgelenk (24) aufweist, dessen Drehachse (26) durch den Achsstummel verläuft.

15. Führvorrichtung nach einem der Ansprüche 1 bis 11, **dadurch gekennzeichnet, dass** die Kupplung (30) als Steckvorrichtung (32) ausgebildet ist und mit einer weiteren Kupplung (36) an dem biegeschlaffen Verbindungselement, insbesondere der Leine (34), lösbar zusammenwirkt, und den der weiteren Kupplung nahen Bereich der Leine in der Verlängerung des Anschlussstummels (18) hält.

16. Führvorrichtung nach Anspruch 15, **dadurch gekennzeichnet, dass** die Verbindung zwischen der Steckvorrichtung (32) und der weiteren Kupplung (36) eine Rastverbindung ist.

17. Führvorrichtung nach einem der Ansprüche 15 oder 16, **dadurch gekennzeichnet, dass** zwischen der Leine (34) und der weiteren Kupplung (36) ein Drehgelenk (24) vorgesehen ist.

18. Führvorrichtung nach Anspruch 15, **dadurch gekennzeichnet, dass** die weitere Kupplung (36) auf der Steckvorrichtung (32) drehbar ausgebildet ist.

19. Führvorrichtung nach einem der Ansprüche 15 bis 18, **dadurch gekennzeichnet, dass** die Steckvorrichtung (32) fest mit dem Stützbereich (14) verbunden ist, wobei die Steckvorrichtung (32) als eine sich nach oben im Wesentlichen senkrecht zum Stützbereich (14) wegerstreckte Verlängerung des Stützbereichs (14) ausgebildet ist.

20. Führvorrichtung nach einem der Ansprüche 15 bis 19, **dadurch gekennzeichnet, dass** der der weiteren Kupplung (36) nahe Bereich des Verbindungselements ausgesteift ist, oder eine reduzierte Biegsamkeit aufweist.

## Claims

1. Leash device for animals, preferably dogs, with a collar or harness, which detachably extends around the neck of the animal, and with a position fixing device, with which a predefined turning position of the collar or harness can be defined relative to the animal, and with a connection device on the collar, where the connection device comprises a connection stub (18), that extends away upwards, is connected to the collar (12) rigidly with the collar (12) or harness in place on the animal, and comprises a coupling (30) at its end, which is turned away from the animal, where this coupling (30) is suitably configured for attaching a limp connection element (34), **characterized in that** the connection stub (18) is configured elastically mobile.

2. Leash device according to claim 1, **characterized in that** the connection stub (18) is firmly connected to the collar (12) or harness at its base and extends essentially perpendicularly to a supporting area (14) on the neck side or the back side of the collar (12) or harness.

3. Leash device according to claim 2, **characterized in that** the supporting area (14) of the collar (12) or harness widens to the front and/or to the rear, i.e. towards the head or the tail of the animal, preferably up to twice the width of the collar (12) or harness.

4. Leash device according to claim 2 or 3, **characterized in that** the supporting area (14) is fastened below the collar (12) or harness, where the connection stub (18) is firmly connected with the supporting area (14).

5. Leash device according to claim 4, **characterized in that** the supporting area (11) attached underneath the collar (12) or the harness is configured such that it merges into the connection stub (18) arranged above the collar (12) or the harness.

6. Leash device according to one of the preceding claims, **characterized in that** the connection stub (18) preferably consists of a coiled spring (20) or an elastomer.

7. Leash device according to claim 6, **characterized in that** the coiled spring (20) comprises windings (22), which are primed in such a way that the coiled spring (20) is only laterally elastically bendable following the application of an initial lateral force.

8. Leash device according to one of the claims 6 or 7, **characterized in that** the coiled spring (20) comprises an internally placed drawstrap, which makes free movement of the spiral spring within the elasticity area possible.

9. Leash device according to one the preceding claims, **characterized in that** the connection stub (18) comprises a length of 1.5 to 30 cm, in particular of 5 to 20 cm and preferably of approximately 12 to 15 cm.

10. Leash device according to one of the preceding claims, **characterized in that** the coupling (30) is configured in form of a ring (28) or a plug-in section (32).

11. Leash device according to one of the preceding claims, **characterized that** the coupling (30) of the connection stub (18) comprises a free inner diameter of 8 mm to 40 mm, in particular of approximately 20 mm, and in particular forms a closed geometrical form like a ring, preferably a torus, and is suitably configured for the connection of the flexible coupling element, preferably a lead (34).

12. Leash device according to one of the preceding claims, **characterized in that** the connection stub (18) tapers towards the coupling (30) and preferably the coupling (30) is firmly connected to the connection stub (18).

13. Leash device according to one of the preceding claims, **characterized in that** the coupling (30), comprises an upright standing ring, preferably in form of an annulus or a semi-circular ring.

14. Leash device according to one of the preceding claims, **characterized in that** the coupling (30) comprises a pivoting joint (24), whose axis of rotation (26) runs through the axle end.

15. Leash device according to one of the claims 1 to 11, **characterized in that** the coupling (30) is designed as an insertion device (32) and operates detachably with a further coupling (36) on the flexible coupling element, preferably the lead (34), and maintains the region of the lead close to the further coupling in the extension of the connection stub (18).

16. Leash device according to claim 15, **characterized in that** the connection between the insertion apparatus (32) and the further coupling (36) is a snap-on connection.

17. Leash device according to one of the claims 15 or 16, **characterized in that** a swivel joint (24) is provided between the lead (34) and the further coupling (36).

18. Leash device according to claim 15, **characterized in that** the further coupling (36) is configured swivelling on the insertion device (32).

19. Leash device according to one to one of the claims 15 to 18, **characterized in that** the insertion device (32) is firmly connected to the supporting area (14), where the insertion device (32) is configured as an extension the supporting area (14), essentially extending vertically away from the supporting area upwards (14).

20. Leash device according to one of the claims 15 to 19, **characterized in that** the area of the coupling element close to the further coupling (36) is stiffened, or comprises a reduced flexibility.

## Revendications

1. Dispositif de laisse pour un animal, de préférence un chien, avec un collier ou un harnais, qui s'étend autour du cou de l'animal, et avec un dispositif de fixation de position, avec lequel une position de rotation prédéfinie du collier ou du harnais relative à l'animal peut être définie, et avec un dispositif de raccordement sur le collier, où le dispositif de raccordement présente un moignon de raccordement (18), qui se prolonge vers le haut quand le collier (12) ou le harnais est en place sur l'animal, est relié inflexiblement au collier (12), et présente un dispositif d'accouplement (30) à son extrémité opposée à l'animal, où ce dispositif d'accouplement (30) est configuré pour y attacher un élément de raccordement (34) flexible, **caractérisé en ce que** le moignon de raccordement (18) est configuré élastiquement mobile.

2. Dispositif de laisse selon la revendication 1, **caractérisée en ce que** le moignon de raccordement (18) est fermement relié au collier (12) ou au harnais à sa base et s'étend essentiellement perpendiculaire à une zone de support (14) du côté de cou ou du dos du collier (12) ou du harnais.

3. Dispositif de laisse selon la revendication 2, **caractérisée en ce que** la zone de support (14) du collier (12) ou du harnais s'élargit vers l'avant et/ou l'arrière, c.-à-d. vers la tête ou la queue de l'animal, de préférence jusqu'au double de la largeur du collier (12) ou du harnais.

4. Dispositif de laisse selon la revendication 2 ou 3, **caractérisé en ce que** la zone de support (14) est attachée au-dessous du collier (12) ou du harnais, où le moignon de raccordement (18) est fermement relié à la zone de support (14).

5. Dispositif de laisse selon la revendication 4, **caractérisée en ce que** la zone de support (11), attaché sous le collier (12) ou le harnais, est configurée de telle manière qu'elle se confonde dans le moignon de raccordement (18) disposé au-dessus du collier (12) ou du harnais.

6. Dispositif de laisse selon l'une des revendications précédentes, **caractérisé en ce que** le moignon de raccordement (18) se compose de préférence d'un ressort hélicoïdal (20) ou d'un élastomère.

7. Dispositif de laisse selon la revendication 6, **caractérisée en ce que** le ressort hélicoïdal (20) présente des enroulements (22), qui sont amorcée de telle manière que le ressort hélicoïdal (20) ne devienne latéralement élastiquement pliable qu'après l'application d'une force latérale initiale.

8. Dispositif de laisse selon l'une des revendications 6 ou 7, **caractérisé en ce que** le ressort hélicoïdal (20) présente un tirant placé à l'intérieur, qui rend possible la libre circulation du ressort en spirale dans la zone d'élasticité.

9. Dispositif de laisse selon l'une les revendications précédentes, **caractérisé en ce que** le moignon de raccordement (18) présente une longueur de 1,5 à 30 centimètres, en particulier de 5 à 20 centimètres et de préférence d'approximativement 12 à 15 centimètres.

10. Dispositif de laisse selon l'une des revendications précédentes, **caractérisé en ce que** le dispositif d'accouplement (30) est configuré sous forme d'anneau (28) ou de section d'insertion (32).

11. Dispositif de laisse selon l'une des revendications précédentes, **caractérisé que** le dispositif d'accouplement (30) du moignon de raccordement (18) présente un diamètre intérieur libre de 8 millimètres à 40 millimètres, en particulier d'approximativement 20 millimètres, et en particulier forme une forme géométrique fermée comme un anneau, de préférence un tore, et est configuré pour le raccordement de l'élément flexible d'accouplement, de préférence une laisse (34).

12. Dispositif de laisse selon l'une des revendications précédentes, **caractérisé en ce que** le moignon de raccordement (18) réduit vers le dispositif d'accouplement (30) et de préférence le dispositif d'accouplement (30) est fermement relié au moignon de raccordement (18).

13. Dispositif de laisse selon l'une des revendications précédentes, **caractérisé en ce que** le dispositif d'accouplement (30), présente un anneau droit, de préférence sous forme d'anneau ou d'anneau semi-circulaire.

14. Dispositif de laisse selon l'une des revendications précédentes, **caractérisé en ce que** le dispositif d'accouplement (30) présente un joint pivotant (24), dont l'axe de rotation (26) court à travers l'extrémité d'axe.

15. Dispositif de laisse selon l'une des revendications 1 à 11, **caractérisé en ce que** le dispositif d'accouplement (30) est conçu comme dispositif d'insertion (32) et concourt amovible avec un dispositif d'accouplement (36) supplémentaire sur l'élément flexible d'accouplement, de préférence une laisse (34), et maintient la zone du fil proche du dispositif d'accouplement supplémentaire dans la prolongation du moignon de raccordement (18).

16. Dispositif de laisse selon la revendication 15, **caractérisée en ce que** le raccordement entre le dispositif d'insertion (32) et le dispositif d'accouplement supplémentaire (36) est un raccordement d'encliquetage.

17. Dispositif de laisse selon l'une des revendications 15 ou 16, **caractérisé en ce qu'**une articulation rotoïde (24) est fournie entre la corde (34) et le dispositif d'accouplement supplémentaire (36).

18. Dispositif de laisse selon la revendication 15, **caractérisée en ce que** le dispositif d'accouplement supplémentaire (36) est configuré orientable sur le dispositif d'insertion (32).

19. Dispositif de laisse selon un à une des revendications 15 18, **caractérisé en ce que** le dispositif d'insertion (32) est fermement relié à la zone de support (14), où le dispositif d'insertion (32) est configuré comme une prolongation de la zone de support (14), s'étendant vers le haut essentiellement vertical à la zone de support (14).

20. Dispositif de laisse selon l'une des revendications 15 19, **caractérisé en ce que** la zone du dispositif d'accouplement près du dispositif d'accouplement supplémentaire (36) est raidie, ou présente une flexibilité réduite.
